# EUROPÄISCHE PATENTSCHRIFT

(11) **EP 2 780 213 B1**
(45) Veröffentlichungstag und Bekanntmachung des Hinweises auf die Patenterteilung: **24.02.2016**
(21) Anmeldenummer: 12778659.8
(22) Anmeldetag: 04.10.2012
(51) Int. Cl.: B62D 15/02, G01C 21/36, B60R 21/00

(54) **VERFAHREN UND VORRICHTUNG ZUM BESTIMMEN EINER AUSPARKSTRATEGIE**
METHOD AND DEVICE FOR DETERMINING A STRATEGY FOR LEAVING A PARKING SPACE
PROCÉDÉ ET DISPOSITIF PERMETTANT DE DÉFINIR UNE STRATÉGIE DE SORTIE D'UNE PLACE DE STATIONNEMENT

(30) Priorität: 14.11.2011 DE 102011086281
(43) Veröffentlichungstag der Anmeldung: 24.09.2014
(73) Patentinhaber: Robert Bosch GmbH, 70442 Stuttgart (DE)
(72) Erfinder: SCHNEIDER, Bettina, 71642 Ludwigsburg (DE); KLEE, Ulrich, 70176 Stuttgart-West (DE); SCHNEIDER, Marcus, 71642 Ludwigsburg (DE)
(86) Internationale Anmeldenummer: PCT/EP2012/069580
(87) Internationale Veröffentlichungsnummer: WO 2013/072134

(56) Entgegenhaltungen:
- WO-A1-2010/103774
- JP-A- 2007 062 625
- JP-A- 2007 320 433
- US-A1- 2008 009 990
- US-A1- 2011 221 585

## Beschreibung

### Stand der Technik

Die Erfindung bezieht sich auf ein Verfahren zum Bestimmen einer Ausparkstrategie und auf eine Vorrichtung zur Durchführung des Verfahrens.

Assistenzsysteme zur Unterstützung eines Fahrers eines Kraftfahrzeugs bei verschiedenen Fahrmanövern werden immer häufiger in moderne Kraftfahrzeuge eingebaut. Diese Fahrassistenzsysteme werden auch zur Unterstützung des Fahrers beim Ein- und Ausparken eingesetzt. Je nach Ausführungsform des Assistenzsystems wird der Fahrer dabei nicht nur über Anweisungen, sondern auch durch Lenkeingriffe und Bremseingriffe unterstützt, sodass sich die Tätigkeit des Fahrers nach Aktivierung des Assistenzsystems auf die Kontrolle des Fahrmanövers und auf das Beschleunigen und Bremsen beschränkt.

Der WO2010103774 ist als nächstliegender Stand der Technik zu sehen und zeigt ein Verfahren zum Bestimmen einer Ausparkstrategie, umfassend folgende Schritte: - Erfassen einer Trajektorie die die Bewegung des Fahrzeugs 1 vor und während des Einparkens in eine Parklücke beschreibt, - Ermitteln der Parklückenart, - Speichern der Parklückenart und/oder der Trajektorie, - Auswählen der Ausparkstrategie in Abhängigkeit der ermittelten Parklückenart.

Aus der WO 2009/000373 A1 ist ein Parklenkassistenzsystem und ein Verfahren zum Unterstützen eines Ausparkvorgangs eines Kraftfahrzeugs bekannt. Das Parklenkassistenzsystem umfasst Mittel zum Erfassen einer Systemaktivierung sowie Mittel zur Ermittlung einer beabsichtigten Ausparkrichtung. Nach Vorgabe der Ausparkrichtung sowie Aktivierung des Systems durch den Fahrer wird das Fahrzeug mit einer minimalen Anzahl von Parkzügen aus der Parklücke herausgeführt. Über einen Aktor kann die Vorrichtung die lenkbaren Räder des Kraftfahrzeugs ausrichten. Abstandssensoren ermitteln während des Ausparkvorgangs den Abstand zu die Parklücke begrenzenden Hindernissen.

Aus der DE 10 2007 036 251 A1 ist ein Verfahren zum Unterstützen von Ausparkvorgängen sowie eine entsprechende Vorrichtung bekannt. Bei dem offenbarten Verfahren werden während des Einparkens des Fahrzeugs Sensordaten erfasst um die physikalische Umgebung des Kraftfahrzeugs zu modellieren. Diese Daten werden nach der Berechnung der Umgebung gespeichert. Bei einem folgenden Ausparkvorgang werden die gespeicherten Daten abgerufen und vor der Freigabe mithilfe aktueller Daten von den Fahrzeugsensoren auf Plausibilität geprüft. Dadurch steht gleich zu Beginn des Ausparkvorgangs ein Modell von der Umgebung des Fahrzeugs zur Verfügung. Dieses Modell wird nach und nach durch aktuelle Sensordaten ergänzt beziehungsweise korrigiert.

Die aus dem Stand der Technik bekannten Verfahren zur Unterstützung eines Fahrers beim Ausparken aus einer Parklücke benötigen vor ihrer Aktivierung Informationen über die Art der Parklücke sowie über die Richtung, in die ein Ausparkmanöver erfolgen soll. Diese Angaben müssen durch den Fahrer über ein geeignetes Verfahren, beispielsweise durch Betätigen von Tasten, Drehelementen und/oder Interaktion mit einem Touchscreen eingegeben werden. Diese Bedienmöglichkeiten sind meist nicht intuitiv und machen eine Fehlbedienung durch den Fahrer damit sehr wahrscheinlich. Beispielsweise könnte anstelle eines Querausparkvorgangs ein Parallelausparkvorgang ausgewählt werden. Eine solche fehlerhafte Wahl der Ausparkstrategie hätte mit hoher Wahrscheinlichkeit einen Unfall zur Folge.

Eine denkbare Lösungsmöglichkeit wäre, eine Unterstützung durch das Assistenzsystem beim Ausparken nur zuzulassen, wenn auch mittels des Assistenzsystems eingeparkt wurde und somit die Information über die Art der Parklücke und die Richtung, in die ein Ausparkmanöver erfolgen muss, vorliegt. Dies würde zum einen die Möglichkeiten des Assistenzsystems stark einschränken, zum anderen die Akzeptanz durch den Fahrer verringern, da sich der Fahrer bevormundet fühlen könnte.

### Offenbarung der Erfindung

Das erfindungsgemäße Verfahren zum Bestimmen einer Ausparkstrategie umfasst folgende Schritte:
a) Erfassen einer Trajektorie, die die Bewegungen des Fahrzeugs vor und während des Einparkens in eine Parklücke beschreibt,
b) Unterteilung der Trajektorie in eine Anfahrttrajektorie, eine Einparktrajektorie und gegebenenfalls weitere Teiltrajektorien, wobei die Anfahrttrajektorie die Fahrzeugbewegung bei der Anfahrt beschreibt und die Einparktrajektorie die Fahrzeugbewegung während des Einparkens beschreibt,
c) Ermitteln der Parklückenart,
d) Speichern der Parklückenart und/oder der Trajektorie,
e) Auswählen der Ausparkstrategie in Abhängigkeit der ermittelten Parklückenart.

Die Trajektorie, die die Bewegung des Fahrzeugs beschreibt, wird von dazu geeigneten Sensoren ständig erfasst, wobei gegebenenfalls nur ein Teil der Trajektorie der beispielsweise die letzten gefahrenen Meter oder die zuletzt gefahrenen Minuten repräsentiert, gespeichert wird. Die erfasste Trajektorie wird in mehrere Teiltrajektorien unterteilt. Dabei sind für das weitere Verfahren die Anfahrttrajektorie, die die Bewegung des Fahrzeugs bei der Anfahrt auf die Parklücke beschreibt und die Einparktrajektorie die die Fahrzeugbewegung während des Einparkens beschreibt von Interesse, während beispielsweise eine Übergangstrajektorie von der Anfahrttrajektorie in die Einparktrajektorie gegebenenfalls nicht berücksichtigt wird. Umfasst das Einparkmanöver mehr als einen Parkzug ist es bevorzugt bei der Unterteilung der Trajektorie nur den ersten Parkzug der Anfahrttrajektorie und nur den letzten Parkzug der Einparktrajektorie zuzuordnen. Aus der Einparktrajektorie und der Anfahrttrajektorie wird auf die Art der Parklücke geschlossen. Anschließend wird die Parklückenart und/oder die Trajektorie abgespeichert, sodass diese Daten für einen späteren Ausparkvorgang zur Verfügung stehen. Wird später vom Fahrer des Fahrzeugs ein geführter Ausparkvorgang gewünscht, wird mithilfe der gespeicherten Daten eine Ausparkstrategie ausgewählt und einem Fahrassistenzsystem übermittelt.

Es ist bevorzugt, dass die Parklückenart und/oder die Trajektorie, die die Bewegung des Fahrzeugs beschreibt, beim Einparken unabhängig davon, ob der Fahrer ein Fahrassistenzsystem zum Einparken nutzt, gespeichert werden.

Dadurch wird sichergestellt, dass die, für die Auswahl der Ausparkstrategie notwendigen Daten, jederzeit zur Verfügung stehen.

Das Ermitteln der Parklückenart in Schritt c) erfolgt bevorzugt aus einer Winkeldifferenz zwischen der überwiegenden Fahrzeugausrichtung bei der Anfahrt und der überwiegenden Fahrzeugausrichtung beim Einparken.

Unter der überwiegenden Fahrzeugausrichtung bei der Anfahrt wird die gemittelte Fahrzeugausrichtung entlang der Anfahrttrajektorie verstanden. Entsprechend ist die überwiegende Fahrzeugausrichtung beim Einparken die gemittelte Fahrzeugausrichtung entlang der Einparktrajektorie. Die Winkeldifferenz wird durch Subtrahieren der beiden Fahrzeugausrichtungen erhalten. Eine Winkeldifferenz < 0, also zwischen -180° und 0° wird dabei als Richtungsänderung des Fahrzeugs beim Einparken im Uhrzeigersinn definiert. Entsprechend wird eine positive Winkeldifferenz, also ein Winkel zwischen 0° und 180° als Änderung der Fahrzeugausrichtung gegen den Uhrzeigersinn definiert.

Die so erhaltene Winkeldifferenz zwischen der Fahrzeugausrichtung bei der Anfahrt und der Fahrzeugausrichtung beim Einparken wird zur Bestimmung der Parklückenart herangezogen. Beispielsweise wird bei einer Winkeldifferenz zwischen -25° und 25° eine Parklücke als Parallelparklücke, bei einer Winkeldifferenz zwischen 25° und 60° beziehungsweise -25° und -60° als Diagonalparklücke und bei einer Winkeldifferenz zwischen 60° und 120° beziehungsweise -60° und -120° als Querparklücke eingestuft. Die Werte können jedoch in Abhängigkeit von den Fahrzeugabmessungen und länderspezifischen Eigenarten, beispielsweise übliche Größe und Ausrichtung von Parklücken, von den als Beispiel genannten Zahlenwerten abweichen. Die Werte für die Winkeldifferenz, anhand derer die Einstufung der Parklücke erfolgt, werden bevorzugt anpassbar hinterlegt, beispielsweise in einem nichtflüchtigen Speicher eines Steuergeräts. Dadurch können einfach Landes- oder Fahrzeugspezifische Anpassungen vorgenommen werden. Landesspezifische Anpassungen können beispielsweise in einem Land abweichende Ausrichtungen von Diagonalparklücken sein. Zu den Fahrzeugspezifischen Anpassungen gehören beispielsweise Anpassungen an die Breite und Länge des Fahrzeugs.

Neben der Parklückenart kann auch die Richtung, in der ein geführtes Ausparken erfolgen soll, aus der Anfahrttrajektorie, der Einparktrajektorie und/oder der Winkeldifferenz zwischen der überwiegenden Fahrzeugausrichtung bei der Anfahrt und der überwiegenden Fahrzeugausrichtung beim Einparken bestimmt wird.

Erfolgte beispielsweise das Einparken in eine Querparklücke durch einen Rückwärtszug, wird davon ausgegangen, dass das Fahrzeug rückwärts in die Parklücke geparkt wurde und daher wieder vorwärts auszuparken ist. Zudem kann aus der Information ob die Ausrichtung des Fahrzeugs nach dem Einparken gegenüber der Ausrichtung bei der Anfahrt im Uhrzeigersinn oder entgegen dem Uhrzeigersinn gedreht ist, auf die Richtung der Weiterfahrt geschlossen werden.

Das Erfassen der Trajektorie und damit das Erfassen der Bewegung des Fahrzeugs wird bevorzugt bis zum Abstellen des Motors erfasst.

Die Position, an der der Motor des Fahrzeugs abgestellt wurde, kann als Parkposition des Fahrzeugs verwendet werden. Des Weiteren eignet sich dieser Zeitpunkt, an dem der Motor abgestellt wurde, besonders gut zur Durchführung des erfindungsgemäßen Verfahrens, da nun der Endpunkt der Einparktrajektorie feststeht. Alternativ wird die Trajektorie, die die Bewegung des Fahrzeugs beschreibt, gespeichert und das Verfahren unmittelbar vor einem geführten Ausparken durchgeführt.

Die Unterteilung der Trajektorie in Anfahrttrajektorie, Einparktrajektorie und gegebenenfalls weiteren Teiltrajektorien gemäß Schritt b) erfolgt bevorzugt über den Abstand des Fahrzeugs zur endgültigen Parkposition des Fahrzeugs.

Dabei kann beispielsweise eine Grenze für den Abstand vorgegeben werden und Teile der Trajektorie, die einen geringeren Abstand zur Endposition des Fahrzeugs als diese Grenze aufweisen, als zur Einparktrajektorie zugehörig eingestuft werden. Für die Einteilung der Anfahrttrajektorie lassen sich eine obere und eine untere Grenze für den Abstand vorgeben. Dabei werden die Teile der Trajektorie, die in einer geringeren Entfernung als die obere Grenze liegen und gleichzeitig in einer größeren Entfernung als die untere Grenze zur Endposition des Fahrzeugs liegen, als zur Anfahrttrajektorie zugehörig eingestuft. Die Grenzen, bei denen die Unterteilungen der Trajektorie erfolgen, können fest vorgegeben werden. Beispielsweise kann der Abschnitt, der zwischen 25 Meter und 10 Meter von der Endposition des Fahrzeugs entfernt liegt, als Anfahrttrajektorie und der weniger als 5 Meter von der Endposition entfernt liegende Teil als Einparktrajektorie eingestuft werden. Die aufgeführten Werte können jedoch in Abhängigkeit von den Fahrzeugabmessungen und länderspezifischen Eigenarten, beispielsweise übliche Größe und Ausrichtung von Parklücken, von den genannten Zahlenwerten abweichen. Bevorzugt werden die Grenzen anpassbar hinterlegt, beispielsweise in einem nichtflüchtigen Speicher eines Steuergeräts. Dadurch können einfach Landes- oder Fahrzeugspezifische Anpassungen vorgenommen werden.

Bevorzugt werden diese Grenzen ausgehend von einem hinterlegten Startwert angepasst. Als Kriterium für die Anpassung der Grenzen wird die Varianz der Fahrzeugausrichtung verwendet. Liegt die Varianz der Fahrzeugausrichtung, also die Schwankung der Fahrzeugausrichtung um die überwiegende Fahrzeugausrichtung im Bereich der Anfahrttrajektorie beziehungsweise der Einparktrajektorie, unterhalb eines Grenzwertes, wird die Anpassung der Grenzen beendet.

In einer Ausführungsform des Verfahrens wird die Trajektorie, die die Bewegung des Fahrzeugs beschreibt, gemäß Schritt b) an einer Position in Anfahrttrajektorie, Einparktrajektorie und gegebenenfalls weitere Teiltrajektorien unterteilt, bei der das Fahrzeug einen Fahrtrichtungswechsel und/oder einen Gangwechsel ausführt.

Wird beispielsweise bei dem Einparkvorgang ein Vorwärts- und ein Rückwärtszug ausgeführt, kann der Rückwärtszug als Teil der Einparktrajektorie eingestuft werden, während der Vorwärtszug als Teil der Anfahrttrajektorie eingestuft werden kann.

Die Trajektorie, die die Bewegung des Fahrzeugs beschreibt, wird bevorzugt mit Hilfe der Fahrzeuggeschwindigkeit, des Lenkradwinkels, über Radwegsensoren und/oder über Drehratensensoren bestimmt.

Ein weiterer Aspekt der Erfindung ist die Bereitstellung einer Vorrichtung zum Bestimmen einer Ausparkstrategie nach dem soeben vorgestellten Verfahren, umfassend ein Steuergerät mit einem Speicher und einer Verbindung zu einem Fahrassistenzsystem zur Unterstützung eines Fahrers beim Ausparken, Mittel zur Erfassung einer Fahrzeugtrajektorie und Mittel zur Auswertung der Trajektorie.

Das Steuergerät kann beispielsweise ganz oder vollständig in einen Bordcomputer des Fahrzeugs integriert sein oder als gemeinsames Steuergerät mit einem Fahrassistenzsystem ausgeführt sein. Der Speicher des Steuergeräts ist als nichtflüchtiger Speicher ausgeführt, beispielsweise in Form von einem EEPROM, Flashspeicher oder dergleichen.

Die Mittel zur Erfassung der Trajektorie, die die Bewegung des Fahrzeugs beschreibt, sind bevorzugt als Sensor zur Messung der Fahrzeuggeschwindigkeit, Sensor zur Messung des Lenkradwinkels, Radwegsensor und/oder Drehreifensensor ausgeführt.

Da verschiedene andere Assistenzsysteme im Fahrzeug wie beispielsweise ein elektronisches Stabilitätsprogramm oder Antiblockiersystem bereits über solche Sensoren verfügen, ist es bevorzugt, für die erfindungsgemäße Vorrichtung die bereits im Fahrzeug vorhandenen Sensoren zu verwenden.

### Vorteile der Erfindung

Mithilfe des erfindungsgemäßen Verfahrens zum Bestimmen einer Ausparkstrategie stehen einem Assistenzsystem zur Unterstützung eines Fahrers beim Ausparken, stets korrekte Informationen über die Art der Parklücke und über die Richtung, in die ein Ausparkmanöver erfolgen muss, zur Verfügung. Dadurch wird die Bedienung des Assistenzsystems durch den Fahrer erleichtert und die Gefahr einer Fehlbedienung vermindert.

Des Weiteren können Bedienelemente zur Auswahl der Parklückenart und zur Wahl der Ausparkrichtung entfallen, wodurch die Integration von Fahrassistenzsystemen in Fahrzeuge vereinfacht wird.

Durch das Bestimmen der Ausparkstrategie unabhängig von dem vorherigen Einparken mithilfe eines Assistenzsystems wird die Verfügbarkeit des Ausparkassistenzsystems verbessert und dadurch die Akzeptanz des Assistenzsystems beim Fahrer gesteigert.

### Kurze Beschreibung der Zeichnungen

Anhand der Figuren wird die Erfindung nachstehend eingehender beschrieben.

Es zeigen:
- Figur 1: das Einparken eines Fahrzeugs in eine Querparklücke,
- Figur 2: das Einparken eines Fahrzeugs in eine Diagonalparklücke,
- Figur 3: das Einparken eines Fahrzeugs in eine Längsparklücke.

### Ausführungsformen der Erfindung

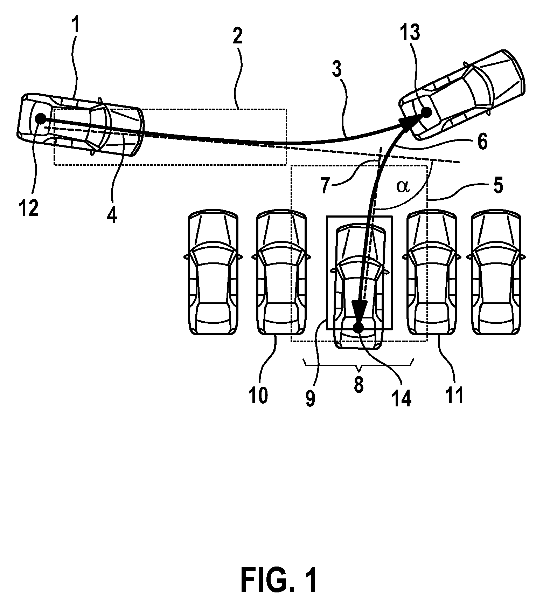

In Figur 1 ist ein Fahrzeug dargestellt, welches in eine Querparklücke einparkt.

Figur 1 zeigt ein Fahrzeug 1 bei einem Einparkmanöver in eine Querparklücke 8. Die Querparklücke 8 wird auf der linken Seite durch das Fahrzeug 10 und auf der rechten Seite durch das Fahrzeug 11 begrenzt. Die angestrebte Parkposition ist mit der Fläche 9 markiert. Das Fahrzeug 1 führt zunächst einen Vorwärtsparkzug entlang der mit dem Bezugszeichen 3 markierten Trajektorie aus. Dabei ändert das Fahrzeug 1 seine Position vom Punkt 12 zum Punkt 13 entlang der Trajektorie 3. Die Trajektorie beschreibt dabei den Weg eines Referenzpunkts im Fahrzeug 1. Als Referenzpunkt wird üblicherweise der Mittelpunkt der Hinterachse des Fahrzeugs gewählt, andere Positionen für den Referenzpunkt wie beispielsweise die Mitte des Fahrzeugs oder der Mittelpunkt der Vorderachse sind ebenfalls möglich. Über einen zweiten Parkzug, der rückwärts entlang der mit dem Bezugszeichen 6 markierten Trajektorie ausgeführt wird, gelangt das Fahrzeug 1 in die mit dem Bezugszeichen 9 markierte Parkposition. Die Bewegung des Fahrzeugs 1 entlang der Trajektorien 3 und 6 wurde über im Fahrzeug 1 vorhandene Sensoren wie beispielsweise Sensoren zur Messung der Fahrzeuggeschwindigkeit, Sensoren zur Messung des Lenkradwinkels, Radwegsensoren und/oder Drehratensensoren erfasst. Nach dem Erreichen der Endposition 14 durch das Fahrzeug 1 wird der Motor des Fahrzeugs 1 abgestellt. Dadurch wird der Endpunkt der Trajektorie, die die Bewegung des Fahrzeugs beschreibt, ermittelt, und das Erfassen der Trajektorie gemäß Schritt a) des Verfahrens abgeschlossen.

Als nächster Schritt folgt die Unterteilung der Trajektorie in eine Anfahrttrajektorie, eine Einparktrajektorie und gegebenenfalls weitere Teiltrajektorien gemäß Schritt b). Als Kriterien für die Unterteilung werden in dem in Figur 1 dargestellten Beispiel die Entfernung zur Endposition 14 und der an der Position 13 erfolgte Fahrtrichtungswechsel herangezogen. Durch den am Punkt 13 erfolgten Fahrtrichtungswechsel wird für eine Einstufung als Einparktrajektorie lediglich ein Rückwärtsfahrzug 6 in Betracht gezogen, während für eine Einstufung als Anfahrttrajektorie lediglich ein Vorwärtsfahrzug 3 in Frage kommt. Als nächstes Kriterium wird die Entfernung von der Endposition 14 angewendet. Dabei ist Entfernung nicht als kürzeste Verbindung eines Punktes zum Endpunkt 14 anzusehen, sondern als Strecke entlang der Fahrzeugtrajektorie. Der Teil der Trajektorie, der weniger als beispielsweise 5 Meter von der Endposition 14 entfernt ist, wird als Einparktrajektorie eingestuft. Für die Einstufung der Anfahrttrajektorie werden zwei Grenzen vorgegeben, eine obere und eine untere Grenze. Diese Grenzen können beispielsweise auf 25 Meter für die obere Grenze und 10 Meter für die untere Grenze festgelegt werden. Die aufgeführten Werte für die Grenzen können in Abhängigkeit von den Fahrzeugabmessungen und länderspezifischen Eigenarten, beispielsweise übliche Größe und Ausrichtung von Parklücken, von den als Beispiel genannten Zahlenwerten abweichen. Bevorzugt werden diese Grenzen anpassbar in einem nicht flüchtigen Speicher hinterlegt, um einfach Landes- oder Fahrzeugspezifische Anpassungen vornehmen zu können. Die Teile der Trajektorie die weniger als 25 Meter von der Endposition 14 des Fahrzeugs entfernt liegen, jedoch weiter als 10 Meter von der Endposition 14 entfernt sind, werden nach diesem Kriterium als Anfahrttrajektorie eingestuft. Treten in den so ermittelten Teiltrajektorien Schwankungen um die überwiegende Fahrzeugsausrichtung auf, die einen vorgegebenen Grenzwert überschreiten, werden diese Grenzen so lange verkleinert, bis die Schwankungen unter dem Grenzwert liegen. Der Teil der Trajektorie, der als Anfahrttrajektorie eingestuft wurde, ist in Figur 1 mit einem Rahmen markiert, der das Bezugszeichen 2 trägt. Der Bereich der Trajektorie 6, der als Einparktrajektorie eingestuft wird, liegt innerhalb des mit dem Bezugszeichen 5 markierten Rahmens.

Für die Ermittlung der Parklückenart wird die mittlere Ausrichtung des Fahrzeugs 1 im Bereich der Anfahrttrajektorie und im Bereich der Einparktrajektorie ermittelt. Die Ausrichtung des Fahrzeugs ist dabei als gemittelte Ausrichtung definiert. Die Fahrzeugausrichtung bei der Anfahrt ist über eine Hilfslinie mit dem Bezugszeichen 4 in der Figur 1 eingezeichnet. Die Hilfslinie, die die überwiegende Fahrzeugausrichtung beim Einparken repräsentiert, ist mit dem Bezugszeichen 7 in Figur 1 gekennzeichnet. Die Winkeldifferenz zwischen den beiden Ausrichtungen des Fahrzeugs 1 ist mit α gekennzeichnet. Die Winkeldifferenz α beträgt etwa -90° weswegen die Parklücke 8 als Querparklücke eingestuft wird. Die Richtung, in die ein Ausparkvorgang erfolgen muss, wird in diesem Fall über die Fahrtrichtung des Fahrzeugs 1 im Bereich der Einparktrajektorie bestimmt. Da das Fahrzeug 1 den letzten Abschnitt rückwärts zurückgelegt hat, muss das Ausparken in Vorwärtsrichtung erfolgen. Da die Winkeldifferenz kleiner als 0° ist, wird angenommen, dass die Weiterfahrt nach dem Ausparken nach rechts erfolgt. Die Richtung, in die die Weiterfahrt erfolgen soll, kann in anderen Ausführungsformen der Erfindung auch über das Setzen des Blinkers eingestellt werden.

Die ermittelten Daten werden im Steuergerät des Fahrzeugs 1 gespeichert und stehen für einen folgenden Ausparkvorgang zur Verfügung. Wird nun vom Fahrer des Fahrzeugs 1 ein geführtes Ausparken gewünscht, stehen für die Wahl der Ausparkstrategie bereits die Art der Parklücke und die Richtung, in die das Ausparken erfolgen muss, zur Verfügung. Weitere Angaben vom Fahrer sind nicht mehr erforderlich, wobei es wie beschrieben möglich ist, die Richtung der Weiterfahrt durch das Setzen des Blinkers einzustellen.

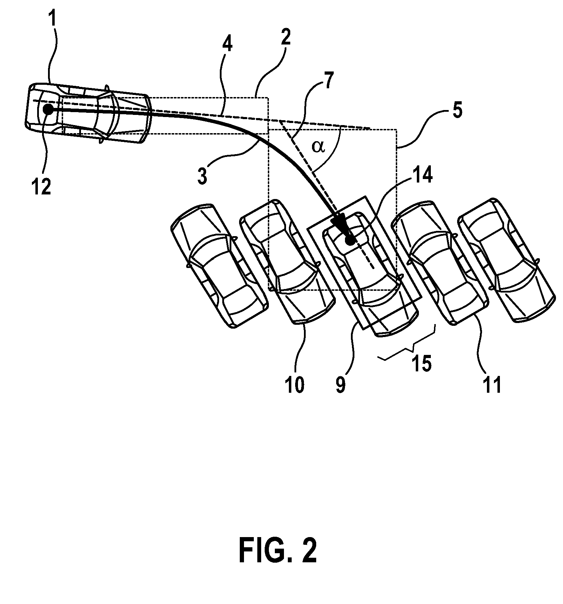

In Figur 2 ist ein Fahrzeug dargestellt, welches in eine Diagonalparklücke einparkt.

Figur 2 zeigt ein Fahrzeug 1 welches ausgehend von der Startposition 12 entlang der Trajektorie 3 die Endposition 14 anfährt. Die Endposition 14 liegt in einem mit dem Bezugszeichen 9 markierten Parkbereich in einer Diagonalparklücke 15. Die Diagonalparklücke 15 wird auf der linken Seite durch das Fahrzeug 10 und auf der rechten Seite durch das Fahrzeug 11 begrenzt. Nach dem Erreichen der Endposition 14 durch das Fahrzeug 1 wird der Motor des Fahrzeugs 1 abgestellt. Dadurch wird das Erfassen der Trajektorie, die die Bewegung des Fahrzeugs 1 beschreibt, beendet, und die Endposition 14 des Fahrzeugs 1 als Endpunkt der Trajektorie festgelegt.

Im nächsten Verfahrensschritt b) wird die Trajektorie, die die Bewegung des Fahrzeugs 1 beschreibt, in mehrere Teile unterteilt. Da in der in Figur 2 dargestellten Situation kein Fahrtrichtungswechsel erfolgt, kommen als Kriterien für die Unterteilung nur der Abstand von der Endposition 14 und eventuelle Gangwechsel in Frage. So kann beispielsweise das Herunterschalten in einen niedrigeren Gang als Startpunkt für die Anfahrttrajektorie gewertet werden. Des Weiteren erfolgt die Einstufung eines Bereichs der Trajektorie als Anfahrttrajektorie durch das Vorgeben einer oberen und einer unteren Grenze für die Entfernung von der Endposition 14. Der Teil der Trajektorie, der zwischen diesen beiden Grenzen liegt, wurde in Figur 2 mit einem Rahmen markiert, der das Bezugszeichen 2 trägt. Für die Einparktrajektorie wird lediglich eine obere Grenze vorgegeben. Der Bereich der Trajektorie 3, der als Einparktrajektorie eingestuft wird, liegt innerhalb des mit dem Bezugszeichen 5 markierten Rahmens.

Wie in den Ausführungen zu Figur 1 bereits beschrieben, wird nun die Parklückenart ermittelt. Dazu werden wieder die mittleren Ausrichtungen 4, 7 des Fahrzeugs 1 im Bereich der Anfahrttrajektorie 2 und im Bereich der Einparktrajektorie 5 ermittelt und die Winkeldifferenz der beiden Ausrichtungen errechnet. In dem in Figur 2 dargestellten Beispiel beträgt die Winkeldifferenz etwa -50°. Daher wird die Parklücke hier als Diagonalparklücke eingestuft.

Im Anschluss werden die ermittelten Daten abgespeichert, damit diese später für ein geführtes Ausparken zur Verfügung stehen.

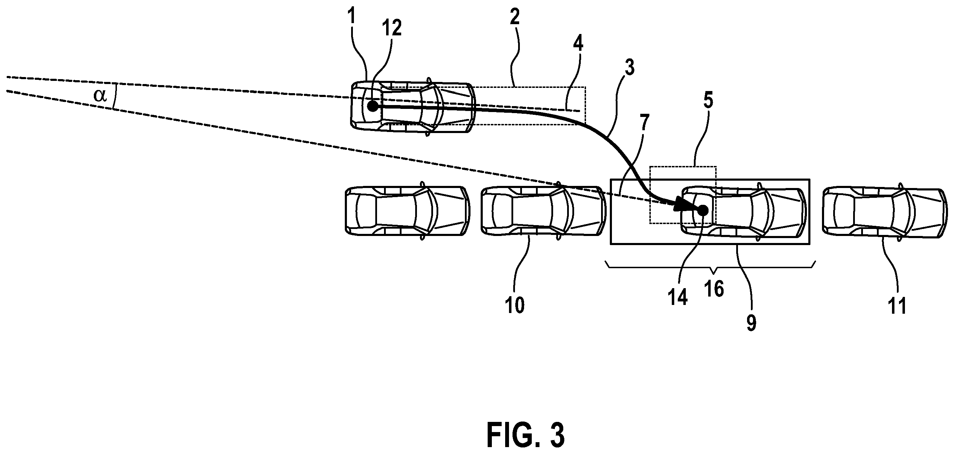

In Figur 3 ist das Einparken in eine Längsparklücke dargestellt.

Figur 3 zeigt ein Fahrzeug 1, welches ausgehend von einer Startposition 12 in eine Längsparklücke 16 einfährt. Der Bereich, in dem das Fahrzeug 1 eingeparkt werden soll, ist mit dem Bezugszeichen 9 markiert und die Endposition des Fahrzeugs 1 in der Parklücke 16 trägt das Bezugszeichen 14. Während des Einparkens wird gemäß Schritt a) des Verfahrens eine Trajektorie, die die Bewegung des Fahrzeugs 1 beschreibt, erfasst. Das Fahrzeug 1 bewegt sich ausgehend von der Startposition 12 entlang der Trajektorie 3 in die Endposition 14 innerhalb der Längsparklücke 16. Die Längsparklücke 16 wird auf der linken Seite durch das Fahrzeug 10 und auf der rechten Seite durch das Fahrzeug 11 begrenzt. Nach dem Abstellen des Motors des Fahrzeugs 1 wird das Erfassen der Trajektorie 3 beendet und die Endposition 14 des Fahrzeugs 1 als Endpunkt der Trajektorie 3 verwendet.

Im nachfolgenden Schritt b) des erfindungsgemäßen Verfahrens erfolgt wieder die Unterteilung der Trajektorie 3 in mehrere Teiltrajektorien. Da in dem gezeigten Ausführungsbeispiel kein Fahrtrichtungswechsel erfolgte, wird als bevorzugtes Kriterium zur Unterteilung der Abstand zur Endposition 14 verwendet. Für die Einteilung eines Bereichs der Trajektorie als Einparktrajektorie wird eine Abstandsgrenze vorgegeben. Diese Abstandsgrenze wird zunächst beispielsweise auf 10 Meter von der Endposition 14 gesetzt. Da die Ausrichtung des Fahrzeugs 1 innerhalb der so gewählten Grenze stark schwankt, wird diese so lange verkleinert, bis die Schwankungen der Fahrzeugausrichtung um die überwiegende Fahrzeugausrichtung (Mittelwert) gering werden.

Analog wird wieder für das Festlegen der Anfahrttrajektorie verfahren, wobei hier wieder eine obere und eine untere Grenze für den Abstand von der Endposition 14 vorgegeben werden. Diese Grenzen dienen wiederum als Startwerte und werden so lange angepasst, bis die Schwankungen der Fahrzeugausrichtung um die überwiegende Fahrzeugausrichtung unterhalb eines Grenzwertes liegen.

Der Bereich, in dem die Trajektorie 3 als Anfahrttrajektorie eingestuft wurde ist in Figur 3 mit dem Bezugszeichen 2 markiert, der Bereich, innerhalb dessen die Trajektorie 3 als Parktrajektorie eingestuft wurde, ist mit dem Bezugszeichen 5 markiert. Wie bereits zu den Figuren 1 und 2 ausgeführt, wird für die Anfahrttrajektorie und die Einparktrajektorie eine mittlere Fahrzeugausrichtung ermittelt und eine Winkeldifferenz errechnet. Die überwiegende Fahrzeugausrichtung im Bereich der Anfahrttrajektorie ist über eine mit dem Bezugszeichen 4 markierte Hilfslinie dargestellt. Die überwiegende Fahrzeugausrichtung im Bereich der Einparktrajektorie ist als Hilfslinie mit dem Bezugszeichen 7 eingezeichnet und die Winkeldifferenz zwischen den überwiegenden Ausrichtungen ist mit dem Bezugszeichen α versehen. Die Winkeldifferenz α beträgt in dem in Figur 3 dargestellten Beispiel etwa -15°, weswegen die Parklücke 16 als Längsparklücke eingestuft wurde.

Die ermittelten Daten werden im Steuergerät des Fahrzeugs 1 abgespeichert und stehen für ein späteres geführtes Ausparken zur Verfügung. Wünscht der Fahrer des Fahrzeugs ein geführtes Ausparken, stehen für die Wahl der nötigen Ausparkstrategie alle benötigten Daten zur Verfügung.

## Patentansprüche

1. Verfahren zum Bestimmen einer Ausparkstrategie, umfassend folgende Schritte:
a) Erfassen einer Trajektorie (3, 6) die die Bewegung des Fahrzeugs (1) vor und während des Einparkens in eine Parklücke (8, 15, 16) beschreibt,
b) Unterteilen der Trajektorie (3, 6) in eine Anfahrttrajektorie (2), eine Einparktrajektorie (5) und gegebenenfalls weitere Teiltrajektorien, wobei die Anfahrttrajektorie (2) die Fahrzeugbewegung bei der Anfahrt beschreibt und die Einparktrajektorie (5) die Fahrzeugbewegung während des Einparkens beschreibt,
c) Ermitteln der Parklückenart,
d) Speichern der Parklückenart und/oder der Trajektorie (3, 6),
e) Auswählen der Ausparkstrategie in Abhängigkeit der ermittelten Parklückenart.

2. Verfahren nach Anspruch 1, **dadurch gekennzeichnet, dass** die Parklückenart und/oder die Trajektorie (3, 6), die die Bewegung des Fahrzeugs (1) beschreibt, beim Einparken unabhängig von der Nutzung eines Fahrassistenzsystems gespeichert wird.

3. Verfahren nach Anspruch 1 oder 2, **dadurch gekennzeichnet, dass** das Ermitteln der Parklückenart gemäß Schritt c) aus einer Winkeldifferenz (α) zwischen der überwiegenden Fahrzeugausrichtung bei der Anfahrt (4) und der überwiegenden Fahrzeugausrichtung beim Einparken (7) erfolgt.

4. Verfahren nach Anspruch 3, **dadurch gekennzeichnet, dass** bei einer Winkeldifferenz (α) zwischen der Fahrzeugausrichtung bei der Anfahrt (4) und der Fahrzeugausrichtung beim Einparken (7) zwischen -25° und 25° eine Parklücke (8, 15, 16) als Längsparklücke (16), bei einer Winkeldifferenz zwischen 25° und 60° beziehungsweise -25° und -60° als Diagonalparklücke (15) und bei einer Winkeldifferenz (α) zwischen 60° und 120° beziehungsweise -60° und -120° als Querparklücke (8) eingestuft wird.

5. Verfahren nach einem der Ansprüche 1 bis 4, **dadurch gekennzeichnet, dass** die Richtung, in die ein geführtes Ausparken erfolgen soll, aus der Anfahrttrajektorie (2) der Einparktrajektorie (5) und/oder der Winkeldifferenz (α) zwischen der überwiegenden Fahrzeugausrichtung bei der Anfahrt (4) und der überwiegenden Fahrzeugausrichtung beim Einparken (7) bestimmt wird.

6. Verfahren nach einem der Ansprüche 1 bis 5, **dadurch gekennzeichnet, dass** die Trajektorie (3, 6), die die Bewegung des Fahrzeugs (1) beschreibt, bis zum Abstellen des Motors erfasst wird.

7. Verfahren nach einem der Ansprüche 1 bis 6, **dadurch gekennzeichnet, dass** die Unterteilung der Trajektorie (3, 6) in Anfahrttrajektorie (2), Einparktrajektorie (5) und gegebenenfalls weitere Teiltrajektorien gemäß Schritt b über den Abstand des Fahrzeugs (1) zur Endposition (14) erfolgt.

8. Verfahren nach einem der Ansprüche 1 bis 7, **dadurch gekennzeichnet, dass** die Trajektorie (3, 6) die die Bewegung des Fahrzeugs (1) beschreibt, gemäß Schritt b) an einer Position in Anfahrttrajektorie (2), Einparktrajektorie (4) und gegebenenfalls weitere Teiltrajektorien unterteilt wird, bei der das Fahrzeug (1) einen Fahrtrichtungswechsel und/oder einen Gangwechsel ausführt.

9. Verfahren nach einem der Ansprüche 1 bis 8, **dadurch gekennzeichnet, dass** die Trajektorie (3, 6) die die Bewegung des Fahrzeugs (1) beschreibt, mithilfe der Fahrzeuggeschwindigkeit, des Lenkradwinkels, über Radwegsensoren und/oder Drehratensensoren bestimmt wird.

10. Vorrichtung zum Bestimmen einer Ausparkstrategie nach einem Verfahren gemäß einem der Ansprüche 1 bis 9, umfassend ein Steuergerät mit einem Speicher und einer Verbindung zu einem Fahrassistenzsystem zur Unterstützung eines Fahrers beim Ausparken, Mittel zur Erfassung einer Fahrzeugtrajektorie und Mittel zur Auswertung der Trajektorie.

11. Vorrichtung nach Anspruch 10, **dadurch gekennzeichnet, dass** die Mittel zur Erfassung der Trajektorie (3, 6) die die Bewegung des Fahrzeugs (1) beschreibt, als Sensor zur Messung der Fahrzeuggeschwindigkeit, Sensor zur Messung des Lenkradwinkels, Radwegsensor und/oder Drehratensensor ausgeführt sind.

## Claims

1. Method for determining a strategy for leaving a parking space, comprising the following steps:
a) detecting a trajectory (3, 6) which describes the movement of the vehicle (1) before and during parking in a parking space (8, 15, 16),
b) subdividing the trajectory (3, 6) into an approach trajectory (2), a parking trajectory (5) and, if appropriate, further partial trajectories, the approach trajectory (2) describing the vehicle movement during the approach, and the parking trajectory (5) describing the vehicle movement during parking,
c) determining the type of parking space,
d) storing the type of parking space and/or the trajectory (3, 6), and
e) selecting the strategy for leaving a parking space as a function of the type of parking space determined.

2. Method according to Claim 1, **characterized in that** the type of parking space and/or the trajectory (3, 6) which describes the movement of the vehicle (1) is stored during parking independently of the use of a driving assistance system.

3. Method according to Claim 1 or 2, **characterized in that** the type of parking space is determined in accordance with step c) from an angular difference (α) between the predominant vehicle orientation during the approach (4) and the predominant vehicle orientation during parking (7).

4. Method according to Claim 3, **characterized in that** a parking space (8, 15, 16) is classified as a longitudinal parking space (16) given an angular difference (α) of between -25° and 25° between the vehicle orientation during the approach (4) and the vehicle orientation during parking (7), as a diagonal parking space (15) given an angular difference of between 25° and 60° or -25° and -60°, and as a transverse parking space (8) given an angular difference (α) of between 60° and 120° or -60° and -120°.

5. Method according to one of Claims 1 to 4, **characterized in that** the direction in which it is intended to guide leaving from the parking space is determined from the approach trajectory (2), the parking trajectory (5) and/or the angular difference (α) between the predominant vehicle orientation during the approach (4) and the predominant vehicle orientation during parking (7).

6. Method according to one of Claims 1 to 5, **characterized in that** the trajectory (3, 6) which describes the movement of the vehicle (1) is detected until the engine is stopped.

7. Method according to one of Claims 1 to 6, **characterized in that** the subdivision of the trajectory (3, 6) into approach trajectory (2), parking trajectory (5) and, if appropriate, further partial trajectories in accordance with step b) is performed over the distance of the vehicle (1) to the end position (14).

8. Method according to one of Claims 1 to 7, **characterized in that** the trajectory (3, 6) which describes the movement of the vehicle (1) is subdivided in accordance with step b) at a position into approach trajectory (2), parking trajectory (4) and, if appropriate, further partial trajectories in the case of which the vehicle (1) executes a change of driving direction and/or gear change.

9. Method according to one of Claims 1 to 8, **characterized in that** the trajectory (3, 6) which describes the movement of the vehicle (1) is determined with the aid of the vehicle speed, the steering wheel angle, via wheel path sensors and/or rate-of-rotation sensors.

10. Device for determining a strategy for leaving a parking space according to a method in accordance with one of Claims 1 to 9, comprising a control unit with a memory and a connection to a driving assistance system for supporting a driver when leaving a parking space, means for detecting a vehicle trajectory and means for evaluating the trajectory.

11. Device according to Claim 10, **characterized in that** the means for detecting the trajectory (3, 6) which describes the movement of the vehicle (1) are designed as sensor for measuring the vehicle speed, sensor for measuring the steering wheel angle, wheel path sensor and/or rate-of-rotation sensor.

## Revendications

1. Procédé permettant de définir une stratégie de sortie de place de stationnement, comprenant les étapes suivantes :
a) détection d'une trajectoire (3, 6) qui décrit le mouvement du véhicule (1) avant et pendant le stationnement dans une place de stationnement (8, 15, 16),
b) division de la trajectoire (3, 6) en une trajectoire de départ (2), une trajectoire de stationnement (5) et éventuellement d'autres trajectoires partielles, la trajectoire de départ (2) décrivant le mouvement du véhicule au départ et la trajectoire de stationnement (5) décrivant le mouvement du véhicule pendant le stationnement,
c) détection du type de place de stationnement,
d) mémorisation du type de place de stationnement et/ou de la trajectoire (3, 6),
e) sélection de la stratégie de sortie de places de stationnement en fonction du type de place de stationnement détecté.

2. Procédé selon la revendication 1, **caractérisé en ce que** le type de place de stationnement et/ou la trajectoire (3, 6) qui décrit le mouvement du véhicule (1) sont mémorisés lors du stationnement indépendamment de l'utilisation d'un système d'assistance à la conduite.

3. Procédé selon la revendication 1 ou 2, **caractérisé en ce que** la détection du type de place de stationnement selon l'étape c) s'effectue à partir d'une différence angulaire (α) entre l'orientation principale du véhicule au départ (4) et l'orientation principale du véhicule lors du stationnement (7).

4. Procédé selon la revendication 3, **caractérisé en ce que** dans le cas d'une différence angulaire (α) entre l'orientation du véhicule au départ (4) et l'orientation du véhicule lors du stationnement (7) entre -25° et 25°, une place de stationnement (8, 15, 16) est saisie comme place de stationnement longue (16), et dans le cas d'une différence angulaire comprise entre 25° et 60°, respectivement -25° et -60°, comme place de stationnement diagonale (15), et dans le cas d'une différence angulaire (α) comprise entre 60° et 120°, respectivement -60° et -120°, en tant que place de stationnement transversale (8).

5. Procédé selon l'une quelconque des revendications 1 à 4, **caractérisé en ce que** la direction dans laquelle la sortie de stationnement guidée doit s'effectuer est déterminée à partir de la trajectoire de départ (2) de la trajectoire de stationnement (5) et/ou de la différence angulaire (α) entre l'orientation principale du véhicule au départ (4) et l'orientation principale du véhicule lors du stationnement (7).

6. Procédé selon l'une quelconque des revendications 1 à 5, **caractérisé en ce que** la trajectoire (3, 6) qui décrit le mouvement du véhicule (1) est détectée jusqu'à l'arrêt du moteur.

7. Procédé selon l'une quelconque des revendications 1 à 6, **caractérisé en ce que** la division de la trajectoire (3, 6) en une trajectoire de départ (2), une trajectoire de stationnement (5) et éventuellement d'autres trajectoires partielles selon l'étape b s'effectue sur la distance du véhicule (1) à la position finale (14).

8. Procédé selon l'une quelconque des revendications 1 à 7, **caractérisé en ce que** la trajectoire (3, 6) qui décrit le mouvement du véhicule (1), selon l'étape b), est divisée en la trajectoire de départ (2), la trajectoire de stationnement (4) et éventuellement d'autres trajectoires partielles, à une position à laquelle le véhicule (1) effectue un changement de direction de conduite et/ou un changement de vitesse.

9. Procédé selon l'une quelconque des revendications 1 à 8, **caractérisé en ce que** la trajectoire (3, 6) qui décrit le mouvement du véhicule (1) est déterminée à l'aide de la vitesse du véhicule, de l'angle du volant, par le biais de capteurs de route et/ou de capteurs de vitesse de rotation.

10. Dispositif permettant de définir une stratégie de sortie de place de stationnement selon un procédé selon l'une quelconque des revendications 1 à 9, comprenant un appareil de commande avec une mémoire et une connexion avec un système d'assistance à la conduite pour aider un conducteur lors de la sortie de stationnement, des moyens pour détecter une trajectoire du véhicule et des moyens pour analyser la trajectoire.

11. Dispositif selon la revendication 10, **caractérisé en ce que** les moyens pour détecter la trajectoire (3, 6) qui décrit le mouvement du véhicule (1) sont réalisés sous forme d'un capteur de mesure de la vitesse du véhicule, d'un capteur de mesure de l'angle du volant, d'un capteur de route et/ou d'un capteur de vitesses de rotation.
